# EUROPÄISCHE PATENTSCHRIFT

(11) **EP 0 343 386 B1**
(45) Veröffentlichungstag und Bekanntmachung des Hinweises auf die Patenterteilung: **28.07.1993**
(21) Anmeldenummer: 89107428.8
(22) Anmeldetag: 25.04.1989
(51) Int. Cl.: G05B 19/42

(54) **Digitalisier-Verfahren und -Anordnung**
Method and arrangement to digitize
Méthode et dispositif de numérisation

(30) Priorität: 21.05.1988 DE 3817454
(43) Veröffentlichungstag der Anmeldung: 29.11.1989
(73) Patentinhaber: Dr. Johannes Heidenhain GmbH, D-83292 Traunreut (DE)
(72) Erfinder: Schwefel, Ernst, Dipl.-Phys., D-8225 Traunreut (DE); Rauth, Michael, Ing. (grad.), D-8225 Traunreut (DE); Huber, Josef, Ing. (grad.), D-8261 Engelsberg (DE); Vollmayr, Norbert, Dipl.-Ing., D-8221 Traunwalchen (DE); Stettner, Rudolf, Ing. (grad.), D-8223 Trostberg (DE)

(56) Entgegenhaltungen:
- EP-A- 0 041 808
- EP-A- 0 077 243
- FR-A- 2 365 406
- PATENT ABSTRACTS OF JAPAN vol. 8, no. 152 (M-309)(1589) 14 Juli 1984, & JP-A-59 47144 (FANUC) 16 März 1984,

## Beschreibung

Die Erfindung bezieht sich auf Verfahren und eine Vorrichtung zum Erfassen von Geometriedaten räumlicher Modelle nach den Oberbegriffen der Ansprüche 1 und 5.

Die Herstellung von Werkstücken mit beispielsweise räumlich gekrümmten Flächen gehört zu den anspruchsvollsten Zerspanungsaufgaben. In der Vergangenheit sind zu diesem Zweck vor allem die Nachformtechniken immer mehr verbessert worden.

Seit der breiten Einführung der numerisch gesteuerten Bearbeitungsmaschinen wurde jedoch der Weiterentwicklung der sogenannten Kopierfräsmaschinen nicht mehr sehr viel Aufmerksamkeit geschenkt.

Erst in jüngster Zeit gewinnt die Nachformung räumlicher Modelle wieder an Bedeutung, und zwar durch die Anwendung der NC-Technologie bei Maschinen für die Nachformung von mathematisch schwer zu beschreibenden Freiformflächen.

In einem Bericht in der Zeitschrift "Werkzeug & Formenbau" vom Juni 1987 ist auf den Seiten 79 und 80 eine derartige Anordnung beschrieben. Dort wird angegeben, daß ein derartiges System durchschnittlich 2,5 Sekunden zur Verarbeitung eines Meßpunktes benötigt. Ein derartiges Verfahren wird auch in der EP-A- 0 041 808 und der EP-A- 0 077 243 offenbart.

Bei komplexen Formen im Karosseriebau oder auch bei ganz normalen Gebrauchsgütern wie Schuhwerk und Gehäusen für Telefone, Bügeleisen usw. ist man mit der konventionellen NC-Fertigung schnell am Ende. Aus diesem Grunde wird häufig ein physikalisches Modell abgetastet, das durch den Designer geschaffen, im Strömungskanal optimiert oder durch den erfahrenen Werkzeug- und Formenbauer entwickelt wurde. Das Urmodell wird dabei zeilenweise abgefahren, ähnlich dem Kopierfräsen. Unterschiedlich ist jedoch, daß nicht direkt ein Werkzeug mitläuft, das die Kopie des Modells erstellt. Vielmehr wird die Oberfläche in Form vieler einzelner Punkte erfaßt und auf einem Massenspeicher (Floppy-Disk, Winchester) abgelegt. Diesen Vorgang nennt man Digitalisieren. Ist die Punktedichte groß genug, repräsentiert die Menge aller Einzelpunkte das Modell. Die so erhaltenen Einzelpunkte können nun mit rechnertechnischen Möglichkeiten bearbeitet werden.

Prinzipiell sind zwei Verfahren zur Geometrieerfassung denkbar.
1. Punktuell: Die Meßmaschinenhersteller bevorzugen häufig die punktuelle Digitalisierung, d. h. daß die Oberfläche aus einem nicht berührenden Raumpunkt angefahren wird, bis der Taststift Modellberührung bekommt. Dieser "Antastung" steht eine "Abtastung" gegenüber, d. h. ein Wegbewegen des Taststiftes von dem Modell. Diese Art der Geometriedatengewinnung ist zwar präzise, aber sehr langsam für die Erfassung großer Flächen.
   Eine ähnliche Anordnung ist in der DE-C- 27 42 344 beschrieben, bei der die Abtastung eines Profils eines Werkstückes mit einer Geschwindigkeitssteuerung erfolgt, die vom Tastsignal abhängig ist. Dort ist in Verbindung mit einem Taktgeber eine digitale Ermittlung der Werkstückkontur möglich, wobei die Impulsfolgefrequenz bzw. die Impulslänge ein Maß für die Steigung des Profils darstellen.
2. Kontinuierlich: Bei der kontinuierlichen Digitalisierung hat der Taststift ständigen Modellkontakt und wird über die Vorlage hinwegbewegt. In der Regel fallen zu äquidistanten Zeitpunkten Oberflächenpunkte an, die weiterverarbeitet werden müssen. Auch diesen Vorgang nennt man häufig "Abtasten". Neben den Meßmaschinen sind als Abtastmaschinen auch Nachformeinrichtungen, spezielle Digitalisiermaschinen, aber auch Industrieroboter denkbar. Ein derartiges Digitalisierungsverfahren wird in der EP-A1- 0 227 842 beschrieben. Bei kontinuierlicher Abtastung ist die Reibung zwischen Modell und Taststift zu berücksichtigen.

Der Erfindung liegt die Aufgabe zugrunde, ein Verfahren und eine Vorrichtung zur Durchführung des Verfahrens anzugeben, welche die jeweiligen Nachteile des punktuellen und des kontinuierlichen Abtastens nicht aufweisen und die demgemäß mit der Genauigkeit des punktuellen Abtastens und der Schnelligkeit des kontinuierlichen Abtastens aufwarten können. Diese Aufgabe wird durch Verfahren mit den Merkmalen des Anspruchs 1 und mit einer Vorrichtung mit den Merkmalen des Anspruches 5 gelöst.

Die besonderen Vorteile liegen darin, daß durch die quasi-kontinuierliche Abtastung eines Modelles eine Digitalisierung mit den Vorzügen beider Abtastprinzipien ermöglicht wird. Werkzeugmaschinen, auf denen die Digitalisierung der räumlichen Modelle bevorzugt durchgeführt werden soll, werden mechanisch nicht mehr so stark beansprucht, da die beim herkömmlich punktuellen Abtasten auftretenden starken Beschleunigungen und Abbremsungen stark verringert werden. In weiterer Ausgestaltung kann das Verfahren besonders vorteilhaft auf einer NC-Maschine durchgeführt werden ohne daß der Bediener ein NC-Programm erstellen muß. Ferner kann ein separater Personal-Computer - wie er in der Literaturstelle "Werkzeug & Formenbau", Juni 1987, S 79, 80 als erforderlich beschrieben ist - entfallen und auch ein Taktgenerator ist nicht erforderlich.

Mit Hilfe eines Ausführungsbeispieles soll die Erfindung nachstehend anhand der Zeichnungen noch näher erläutert werden.

Es zeigt
- Figur 1: ein Blockschaltbild einer Digitalisier-Anordnung,
- Figur 2: Abtastkennlinien und
- Figur 3: verschiedene Tastkopf-/Werkstückkonfigurationen.

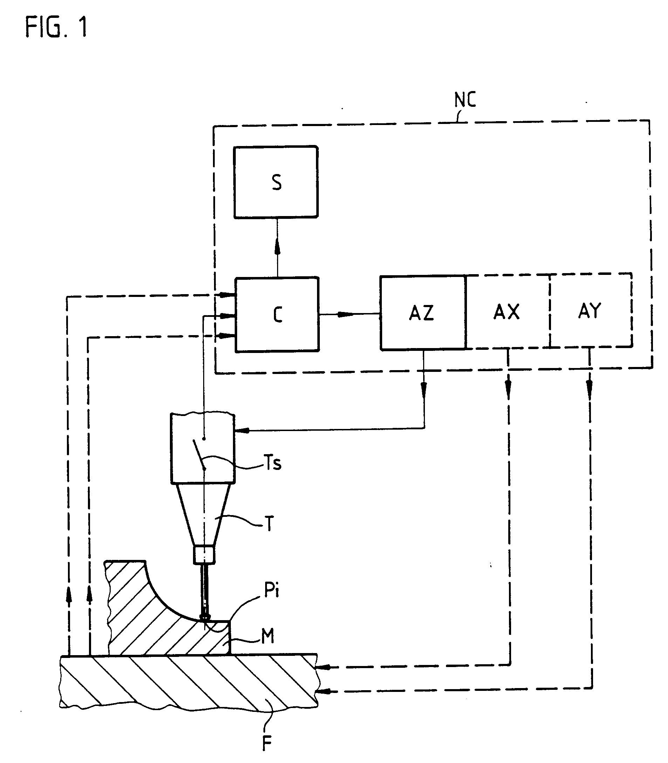

Das Blockschaltbild in Figur 1 zeigt stark schematisiert einen Teil eines Maschinentisches, der zu einer Werkzeugmaschine F gehört. Mit nicht dargestellten Mitteln ist ein Modell eines Werkstückes M auf dem Maschinentisch der Werkzeugmaschine F befestigt.

In einer nicht dargestellten Spindel der Werkzeugmaschine F befindet sich ein schaltender Tastkopf T. Der Tastkopf T liefert ein Schaltsignal, wenn sich ein Schalter Ts im Tastkopf T bei Kontaktberührung bzw. Kontaktunterbrechung mit dem Werkstück M öffnet bzw. schließt. Das Signal wird einer numerischen Steuerungseinrichtung NC zugeführt, die nach vorgegebenen Daten die Bewegungen der Werkzeugmaschine F steuert. Die Bewegungen der Maschinenachsen Xf, Yf und Zf werden von zugehörigen Maschinenantrieben AX, AY und AZ hervorgerufen.

Für die nachfolgenden Betrachtungen wird ein karthesisches Koordinatensystem zugrunde gelegt, was aber nicht unbedingt für die Erfindung Voraussetzung ist.

Das Werkstück M befindet sich also innerhalb einer Abtastregion die durch Koordinaten Xmin, Xmax; Ymin, Ymax und Zmin, Zmax definiert ist. Der Tastkopf T bewegt sich mäanderförmig über die X, Y-Ebene und tastet dabei das Werkstück M ab. Sobald der Tastkopf T in Kontaktberührung mit dem Werkstück M gekommen ist, wird ein Schaltsignal ausgelöst, wodurch die numerische Steuerungseinrichtung NC den Maschinenantrieb AZ für die Z-Achse umsteuert und dadurch den Tastkopf T von der Oberfläche des Werkstückes M zurückzieht. Meßwegaufnehmer C, die mit den Maschinenachsen Xf, Yf und Zf in bekannter Weise gekoppelt sind, werden im Berührungsmoment abgefragt, so daß die Koordinaten des sogenannten Antastpunktes Pi ermittelt und in einem Speicher S abgespeichert werden. Durch diese Maßnahme ist ein Punkt Pi der Kontur des Werkstückes M erfaßt.

Sobald der umgesteuerte Maschinenantrieb AZ bewirkt hat, daß der Tastkopf T keine Kontaktberührung mit dem Werkstück M mehr hat, wird der Maschinenantrieb AZ wieder umgesteuert, so daß sich der Tastkopf T zum Werkstück M hin bewegt. Auf diese Weise oszilliert der Tastkopf T in axialer Richtung (Z-Richtung).

Dieser Oszillation wird eine Vorschubbewegung überlagert, die etwa senkrecht dazu verläuft. Die Vorschubbewegung verläuft in X-Richtung innerhalb der Abtastregion von Xmin bis Xmax, dann erfolgt ein vorgegebener Schritt in Y-Richtung und anschließend wird die Vorschubbewegung in negativer X-Richtung wieder aufgenommen. Dabei bewegt sich der Tastkopf T von Xmax bis Xmin. Dort erfolgt wieder ein Schritt in Y-Richtung usw.,was zu einem mäanderförmigen Abzeilvorgang führt. Dabei verlaufen in X-Richtung die Zeilen und in Y-Richtung die Spalten.

Wie bereits erwähnt, muß die Abtastung keineswegs mäanderförmig erfolgen und die Vorschubbewegungen müssen auch keinesfalls achsparallel verlaufen.

Um eine möglichst kontinuierliche Abtastung des Werkstückes M zu erzielen, muß die Oszillationsbewegung des Tastkopfes T mit der überlagerten Vorschubbewegung abgestimmt werden. Erfindungsgemäß wird dies dadurch erreicht, daß nach jedem Antastvorgang, bei dem ein Antastpunkt Pi ermittelt wurde, der Vorschub als Schritt mit einer bestimmten Schrittweite von der Steuerungseinrichtung NC neu vorgegeben wird.

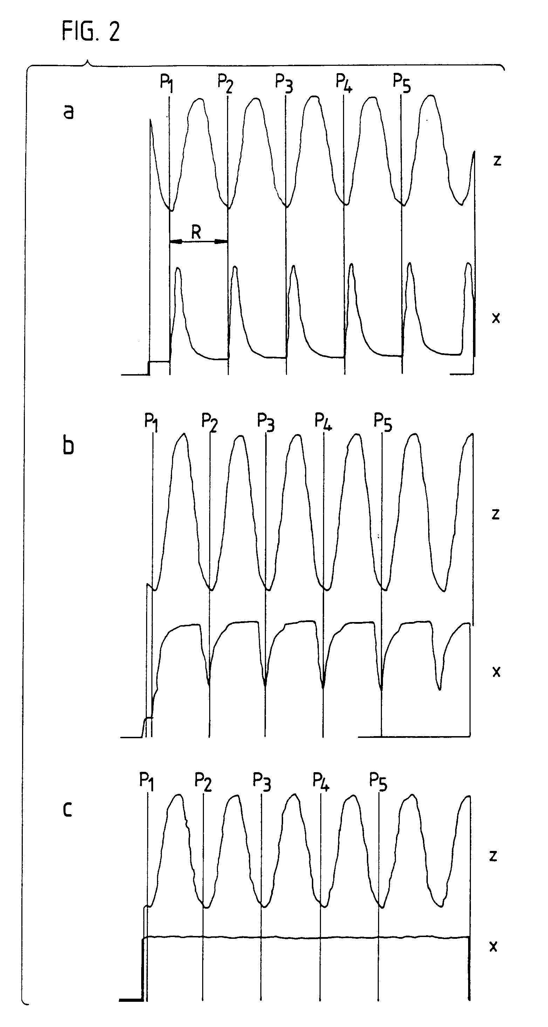

In Figur 2a bis 2c sind Kennlinien dargestellt, anhand derer die Anpassung des Vorschubes an die Oszillation des Tastkopfes erläutert wird.

Diese Kurven sind nicht maßstäblich, sie sollen lediglich das Prinzip verdeutlichen. Die obere Kurve in Figur 2a zeigt die Oszillation des Tastkopfes T in der Z-Achse, der ein Vorschub in X-Richtung überlagert ist. Die untere Kurve zeigt ein Signal, das der Sollwertspannung am Maschinenantrieb AX für die X-Achse entspricht.

Der Tastkopf T hat an der ersten Linie das erste Mal Kontakt mit dem Werkstück M, so daß ein Antastpunkt P1 ermittelt wird. Aus der oberen Kurve ist ersichtlich, daß sich Tastkopf T noch geringfügig in der Oszillations-Richtung weiter bewegt, was auf ein Überschwingen bei derartigen Regelkreisen zurückzuführen ist. Im Moment der Kontaktberührung am Punkt P1 wird ein Schaltsignal vom Tastkopf T erzeugt, die Koordinaten werden abgespeichert, der Tastkopfantrieb AZ wird umgesteuert und der Maschinenantrieb AX bekommt den Befehl, den Maschinenschlitten in Richtung der X-Achse um einen Rasterschritt R weiter zu verschieben. Dazu muß der Maschinenschlitten möglichst rasch beschleunigt werden (steiler Flankenanstieg in der unteren Kurve), um nach Erreichen seines Geschwindigkeitssollwertes so rechtzeitig wieder abgebremst zu werden, daß er am Ende des vorgegebenen Rasterschrittes R wieder zum Stillstand gekommen ist. In diesem Moment hat der oszillierende Tastkopf T wieder Berührung mit dem Werkstück M und der Antastpunkt P2 ist ermittelt. Wie vorbeschrieben werden die Koordinaten dieses Punktes P2 gespeichert, der Umsteuerbefehl an die Z-Achse ausgegeben und der Befehl, die X-Achse um einen Rasterschritt R weiter zu verfahren, an den Maschinenantrieb AX gegeben.

Auf diese Weise erhält man zuverlässig im vorgegebenen Raster in der Weite eines Rasterschrittes R immer einen Antastpunkt Pi.

In Figur 2b sind die Maschinenparameter schon besser abgestimmt. Wenn der erste Antastpunkt P1 in der vorbeschriebenen Weise bestimmt ist, startet der Vorschub in X-Richtung um nach Erreichen des Sollwertes wieder in die Abbremsphase überzugehen. Bevor der Maschinenschlitten jedoch zum Stillstand gekommen ist, erfolgt schon der nächste Antastvorgang zur Ermittlung des Antastpunktes P2. Die vorgegebene Schrittweite des Rasters R ist von der Bewegung des Maschinenschlittens bezüglich des Beschleunigungs- und Bremsvorganges nicht voll ausgeschöpft worden, denn bevor der Bremsvorgang beendet war, wurde durch das Schaltsignal am Antastpunkt P2 schon wieder die Beschleunigungsphase eingeleitet.

Die Kurven in Figur 2c zeigen das erfindungsgemäße Abtastverfahren mit optimierten Maschinenparametern. Die Frequenz der Tastkopfoszillation, die Vorschubgeschwindigkeit in der Abzeilrichtung (X-Richtung) und die Schrittweite des Rasters R sind so aufeinander abgestimmt, daß der Maschinentisch sich kontinuierlich in Vorschubrichtung X bewegt. Dadurch wird der Abtastvorgang quasi-Kontinuierlich.

Da aber nach jedem Antastvorgang ein Rasterschritt R als Vorschub vorgegeben wird, ist sicher gewährleistet, daß mindestens ein Antastpunkt Pi pro Rasterschritt R ermittelt wird.

Die Figur 2c könnte den Eindruck vermitteln, daß die Erfindung darin bestünde, einer konstanten Vorschubbewegung in X-Richtung eine oszillierende Tastkopfbewegung zu überlagern. Dies ist jedoch ausdrücklich nicht der Fall, denn bei einer konstanten Vorschubbewegung ist nicht gewährleistet, daß bei beliebigen Änderungen der Steigung des Profils des abzutastenden Werkstückes M hinreichend viele Antastpunkte Pi ermittelt werden können. Sollte nämlich die Steigung des Profiles stark zunehmen oder stark abfallen, so wird der Vorschub gemäß der Erfindung spätestens nach einer Schrittweite des Rasters R gestoppt, und zwar so lange, bis der nächste Antastvorgang erfolgt ist.

Damit wird das erfindungsgemäße Abtastverfahren auch unabhängig von der Güte der Werkzeugmaschine, mit der es durchgeführt wird. Die Schnelligkeit der Antriebe, die bewegten Massen und auch andere Kriterien spielen eine untergeordnete Rolle.

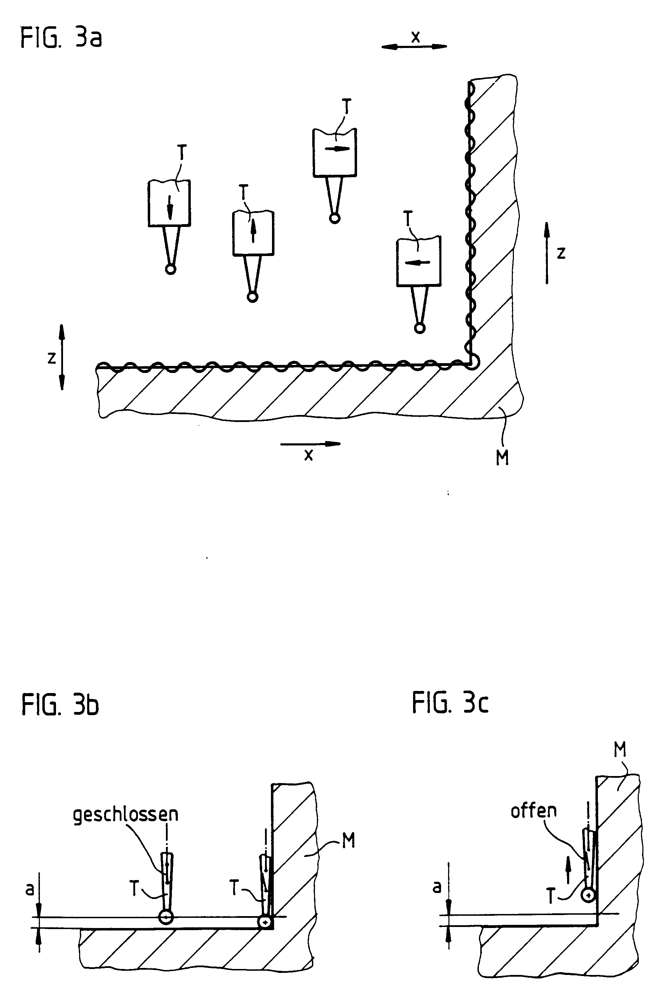

In Figur 3a ist ein Werkstück M ausschnittsweise gezeigt, an dessen Kanten sich der Tastkopf T mit einer näherungsweise sinusförmigen Oszillationsbewegung entlang tastet. Es ist ersichtlich, daß der Tastkopf T an der waagerechten Kante in seiner axialen Richtung (Z-Richtung) oszilliert und dieser Bewegung ein Vorschub in X-Richtung überlagert wird. An der senkrechten Kante des Werkstückes M wird die Richtungsänderung der Kontur erkannt und der Tastkopf T oszilliert in X-Richtung, der Vorschub erfolgt in Z-Richtung. Es versteht sich, daß bei anderen Steigungen der Kontur des Werkstückes M die genannten Bewegungen nicht achsparallel verlaufen, sondern durch simultanes Verfahren in mehreren Achsen jede beliebige Neigung haben können. Die Oszillationsbewegung sollte möglichst immer senkrecht zur Vorschubrichtung, d. h. senkrecht zur Werkstückkontur verlaufen.

Anhand der Figuren 3b und 3c soll erläutert werden, wie gemäß dem erfindungsgemäßen Verfahren eine Richtungsänderung der Kontur des Werkstückes M erkannt wird.

Der Pfeil im Tastkopf T deutet an, daß er sich zur Werkstückskontur hin bewegt. Dabei ist der Schalter Ts geschlossen, denn der Tastkopf T ist nicht ausgelenkt. Bei Berührungskontakt mit dem Werkstück M wird der Tastkopf T ausgelenkt und der Schalter Ts geöffnet. Nun erfolgt der Umsteuerbefehl, denn es ist zu einem Schaltsignalgekommen. Nach dem Umsteuerbefehl wird der Tastkopf T von der Kontur des Werkstücks M zurückgezogen und müßte innerhalb einer gewissen Wegstrecke, die hier mit "a" bezeichnet ist, wieder frei werden. DaS heißt, der Tastkopf T müßte wieder in den nicht ausgelenkten Zustand zurückkehren, was wieder ein Schaltsignal zur Folge hätte, aufgrund dessen ein weiterer Umsteuerbefehl wieder die Annäherung des Tastkopfes T an das Werkstück M bewirken würde.

Die Figur 3c zeigt jedoch, daß der Tastkopf T nach der vorbestimmbaren Wegstrecke "a" nocht nicht frei geworden ist, weil die Steigung der Kontur des Werkstückes M sich geändert hat. Ein Schaltsignal wurde deshalb nicht ausgelöst. Für diese Situation bieten sich alternative Verfahrensschritte an.
a) Die Vorschubbewegung wird verlangsamt oder gestoppt und der Tastkopf T wird solange axial verfahren (in Z-Richtung), bis er wieder in den nicht ausgelenkten Zustand kommt und dadurch ein Schaltsignal auslöst, mit dem die vorbeschriebenen Vorgänge wieder gestartet werden.
b) Die Vorschubrichtung und die Oszillationsrichtung werden geändert bzw. vertauscht, so das der Tastkopf T in X-Richtung oszilliert und eine Z-Vorschubrichtung überlagert wird.

Wie bereits beschrieben wurde, sind für diesen Fall auch nicht-achsparallele Bewegungen möglich. Die Vorschubrichtung die möglichst immer parallel zur Kontur des Werkstücks M verlaufen soll, wird dadurch errechnet, daß die Koordinaten der jeweils letzten bzw. letzten beiden Antastpunkte Pi-1 und Pi ausgewertet werden. Die Antastbewegung, also die Oszillationsrichtung erfolgt bevorzugt orthogonal dazu.

Es liegt im Rahmen der Erfindung, daß der Tastkopf keinen körperlichen Schalter aufweist, sondern daß auch auf andere Weise bei Kontaktberührung mit dem Werkstück ein Schaltsignal erzeugt werden kann.

## Patentansprüche

1. Verfahren zum Erfassen von Geometriedaten räumlicher Werkstücke (M) auf einer Maschine (F) mit einem das Werkstück (M) abtastenden Tastkopf (T), der mit Hilfe einer numerischen Steuerungseinrichtung (NC) durch den Vorschub der Maschine (F) an einer Kontur des Werkstückes (M) entlanggeführt wird, wobei Schaltsignale des Tastkopfes (T), die aus oszillierenden Abtastbewegungen des Tastkopfes (T) an das Werkstück (M) abgeleitet werden, sowohl zur Bildung der Geometriedaten des Werkstückes (M) als auch zur Steuerung der Maschinenantriebe (AX, AY, AZ) für die Maschinenachsen (Xf, Yf, Zf) derart verwendet werden, daß den oszillierenden Abtastbewegungen des Tastkopfes wenigstens eine zur jeweiligen Oszillationsachse im wesentlichen orthogonale Vorschubbewegung entlang der Werkstückkontur überlagert wird, dadurch gekennzeichnet, daß nach jedem durch einen Abtastvorgang gewonnenen Schaltsignal des Tastkopfes (T) die Vorschubbewegung in Form eines Rasterschrittes (R) mit vorbestimmbarer Schrittweite neu vorgegeben wird, und daß die Tasteroszillations- und die Vorschubbewegungen anhand von Maschinenparametern so aufeinander abgestimmt werden, daß sich ein quasi-kontinuierlicher Abtastvorgang ergibt.

2. Verfahren nach Anspruch 1, dadurch gekennzeichnet, daß die Vorschubbewegung verlangsamt oder gestoppt wird, wenn der Tastkopf (T) in der Oszillationsachse eine bestimmte Wegstrecke (a) überschreitet und keine Änderung des Schaltsignales erfolgt.

3. Verfahren nach Anspruch 1 oder 2, dadurch gekennzeichnet, daß die Vorschubbewegung aus den Koordinaten-Daten der jeweils letzten beiden Abtastpunkte (Pi-1, Pi) bestimmt wird.

4. Verfahren nach Anspruch 1, dadurch gekennzeichnet, daß die Vorschubrichtung geändert wird, wenn der Tastkopf (T) in der Oszillationsachse eine bestimmte Wegstrecke (a) überschreitet und keine Änderung des Schaltsignales erfolgt.

5. Vorrichtung zur Durchführung eines Verfahrens zum Erfassen von Geometriedaten räumlicher Werkstücke (M) auf einer Maschine (F) mit einem das Werkstück (M) abtastenden Tastkopf (T), der mit Hilfe einer numerischen Steuerungseinrichtung (NC) durch den Vorschub der Maschine (F) an einer Kontur des Werkstückes (M) entlanggeführt wird, wobei Schaltsignale des Tastkopfes (T), die aus oszillierenden Abtastbewegungen des Tastkopfes (T) an das Werkstück (M) abgeleitet werden, sowohl zur Bildung der Geometriedaten des Werkstückes (M) als auch zur Steuerung der Maschinenantriebe (AX, AY, AZ) für die Maschinenachsen (Xf, Yf, Zf) derart verwendet werden, daß den oszillierenden Abtastbewegungen des Tastkopfes wenigstens eine zur jeweiligen Oszillationsachse im wesentlichen orthogonale Vorschubbewegung entlang der Werkstückkontur überlagert wird, dadurch gekennzeichnet, daß der Tastkopf (T), die numerische Steuerungseinrichtung (NC) und die Maschinenantriebe (AX, AY, AZ) einen Regelkreis derart bilden, daß nach jedem durch einen Abtastvorgang gewonnenen Schaltsignal des Tastkopfes (T) die Vorschubbewegung in Form eines Rasterschrittes (R) mit vorbestimmbarer Schrittweite neu vorgegeben wird, und daß die Tasteroszillations- und die Vorschubbewegungen anhand von Maschinenparametern so aufeinander abgestimmt werden, daß sich ein quasi-kontinuierlicher Abtastvorgang ergibt.

## Claims

1. Method of acquiring geometrical data of three-dimensional workpieces (M) on a machine (F) with a probe (T) exploring the workpiece (M) and which is guided along a contour of the workpiece (M) through the feed of the machine (F) with the aid of a numerical control system (NC), the switching signals of the probe (T) which are derived from oscillating exploring movements of the probe (T) on the workpiece (M) being employed in such manner both for forming the geometrical data of the workpiece (M) and for controlling the machine drives (AX, AY, AZ) for the machine axes (Xf, Yf, Zf) that at least one feed movement substantially at right angles to the particular oscillation axis and along the contour of the workpiece is superimposed on the oscillating exploring movements of the probe, characterised in that after each switching signal of the probe (T) obtained through an exploring operation, the feed movement is prescribed afresh in the form of a raster step (R) of predeterminable size, and the oscillating movements of the probe and the feed movements are so coordinated with one another with the aid of machine parameters that a quasi-continuous exploration process results.

2. Method according to claim 1, characterised in that the feed movement is slowed down or stopped if the probe (T) exceeds a certain distance (a) in the oscillation axis and no change takes place in the switching signal.

3. Method according to claim 1 or 2, characterised in that the feed movement is determined from the coordinate data of the last two exploration points (Pi-1, Pi) at any given time.

4. Method according to claim 1, characterised in that the feed movement is changed if the probe (T) exceeds a certain distance (a) in the oscillation axis and no change takes place in the switching signal.

5. Arrangement for carrying into effect a method of acquiring geometrical data of three-dimensional workpieces (M) on a machine (F) with a probe (T) exploring the workpiece (M) and which is guided along a contour of the workpiece (M) through the feed of the machine (F) with the aid of a numerical control system (NC), the switching signals of the probe (T) which are derived from oscillating exploring movements of the probe (T) on the workpiece (M) being employed in such manner both for forming the geometrical data of the workpiece (M) and for controlling the machine drives (AX, AY, AZ) for the machine axes (Xf, Yf, Zf) that at least one feed movement substantially at right angles to the particular oscillation axis and along the contour of the workpiece is superimposed on the oscillating exploring movements of the probe, characterised in that the probe (T), the numerical control system (NC) and the machine drives (AX, AY, AZ) form an automatic control system in such manner that after each switching signal of the probe (T) obtained through an exploring operation, the feed movement is prescribed afresh in the form of a raster step (R) of predeterminable size, and the oscillating movements of the probe and the feed movements are so coordinated with one another with the aid of machine parameters that a quasi-continuous exploration process results.

## Revendications

1. Procédé d'enregistrement de données géométriques de pièces (M) tridimensionnelles sur une machine (F) comportant une tête de palpage (T) qui palpe la pièce (M) et est déplacée le long du contour de la pièce (M) au moyen d'un dispositif de commande numérique (NC) par l'avancement de la machine (F), les signaux de commutation de la tête de palpage (T) qui résultent des déplacements oscillants de palpage de la tête de palpage (T) sur la pièce (M) étant utilisés pour former les données géométriques de la pièce (M) et pour commander les mécanismes d'entraînement de la machine (AX, AY, AZ) pour les axes (Xf, Yf, Zf) de manière telle qu'au moins un mouvement d'avance le long du contour de la pièce, sensiblement orthogonal à l'axe d'oscillation concerné, se superpose aux déplacements oscillants de palpage, caractérisé par le fait qu'à la suite de chaque signal de commutation de la tête de palpage (T) généré au cours d'une phase de palpage, on détermine de nouveau l'avancement sous forme d'un pas de grille (R) de longueur donnée et par le fait que l'on adapte entre eux les déplacements oscillants du palpeur et les mouvements d'avance au moyen de paramètres machines de manière à obtenir un palpage quasi-continu.

2. Procédé selon la revendication 1, caractérisé par le fait que l'on ralentit ou l'on arrête l'avancement lorsque la tête de palpage (T) dépasse une course (a) déterminée sur l'axe d'oscillation et qu'il n'y a pas de modification du signal de commutation.

3. Procédé selon la revendication 1 ou 2, caractérisé par le fait que l'on détermine l'avance à partir des coordonnées des deux derniers points de palpage (Pi-1, Pi).

4. Procédé selon la revendication 1, caractérisé par le fait que l'on modifie la direction d'avance lorsque la tête de palpage (T) dépasse une certaine course (a) sur l'axe d'oscillation et qu'il ne se produit pas de modification du signal de commutation.

5. Dispositif pour la mise en oeuvre d'un procédé d'enregistrement de données géométriques de pièces tridimensionnelles (M) sur une machine (F) comportant une tête de lecture (T) qui palpe la pièce (M) et est déplacée le long d'un contour de la pièce (M) au moyen d'un dispositif à commande numérique (NC) par l'avancement de la machine (F), des signaux de commutation de la tête de palpage (T) qui résultent des déplacements oscillants de palpage de la tête de palpage (T) sur la pièce (M) étant utilisés pour former les données géométriques de la pièce (M) et pour commander les mécanismes d'entraînement de la machine (AX, AY, AZ) pour les axes (Xf, Yf, Zf) de manière telle qu'au moins un mouvement d'avance le long du contour de la pièce, sensiblement orthogonal à l'axe d'oscillation concerné, se superpose aux déplacements oscillants de palpage, caractérisé par le fait que la tête de palpage (T), le dispositif de commande numérique (NC) et les mécanismes d'entraînement de la machine (AX; AY, AZ) constituent un circuit de régulation tel qu'à la suite de chaque signal de commutation de la tête de palpage (T) généré au ours d'une phase de palpage, l'avance est de nouveau déterminée sous forme d'un pas de grille (R) de longueur donnée et par le fait que les mouvement d'avance sont adaptés entre eux à l'aide de paramètres machine de manière à obtenir un palpage quasi-continu.
